# EUROPÄISCHE PATENTANMELDUNG

(11) **EP 0 618 108 A1**
(43) Veröffentlichungstag der Anmeldung: **05.10.1994**
(21) Anmeldenummer: 94104573.4
(22) Anmeldetag: 23.03.1994
(51) Int. Cl.: B60Q 1/30, F21Q 1/00, F16K 15/14

(54) **Mit einem Einwegventil ausgestattete optische Einrichtung für ein Fahrzeug**

(30) Priorität: 27.03.1993 DE 4310040
(71) Anmelder: ITT Automotive Europe GmbH, D-60488 Frankfurt am Main (DE)
(72) Erfinder: Doppel, Klaus, D-96369 Weissenbrunn (DE); Feger, Rolf, D-74321 Bietigheim-Bissingen (DE); Schellewald, Rolf, D-74379 Ingersheim (DE)

(57) **Zusammenfassung**

Die Erfindung betrifft eine optische Einrichtung für ein Fahrzeug, insbesondere eine Fahrzeugheckleuchte, die einen von Wänden gebildeten luftdichten Hohlraum (12) besitzt. Die Wände können dabei als optische Scheibe ausgebildet sein, die ihrem Zweck entsprechend gestaltet und mit optischen Mitteln ausgestattet sind. In eine dieser Wände ist ein Einwegeventil eingesetzt, das bei Überdruck im Hohlraum (12) diesen Hohlraum (12) zwecks Druckausgleichs kurzfristig mit der Umgebungsatmosphäre verbindet. Das Einwegeventil wird gebildet von einer Öffnung in der einen Wandung, deren Mündung an der Außenseite der Wandung erweitert ist. In die Wandung ist ein gummielastischer, pfropfenähnlicher Ventilkörper (16) eingestellt, dessen Schaft schlanker ist als die Öffnung. Mit einer angeformten Schulter hintergreift der Ventilkörper (16) an der Innenseite der Wandung den Rand der Öffnung, und an der Außenseite der Wandung liegt der Ventilkörper (16) mit einer am Rand eines umlaufenden Kragens angeformten Dichtlippe dichtend an.

## Beschreibung

Die Erfindung betrifft eine optische Einrichtung für ein Fahrzeug, insbesondere eine Fahrzeugheckleuchte, die einen von Wänden gebildeten geschlossenen Hohlraum besitzt. Mindestens eine der den Hohlraum bildenden Wände ist zumindest teilweise als optische Scheibe ausgebildet, die entsprechend ihrem funktionalen Zweck mit optischen Elementen zur Reflexion oder Brechung von Lichtstrahlen und/oder mit der erforderlichen Transparenz und Färbung versehen ist. Heutzutage ist es üblich, derartige optische Scheiben aus Kunststoffmaterial herzustellen.

Solchen optischen Einrichtungen haftet der Nachteil an, daß sich bei stärkerer Erwärmung, die in dem Hohlraum eingeschlossene Luft stark ausdehnt und die optische Scheibe durch den entstehenden Überdruck deformiert oder beschädigt wird. Die Deformation kann dabei solche Ausmaße annehmen, daß die geometrischen Veränderungen der optischen Scheibe die ordnungsgemäße Funktion der optischen Einrichtung stören. Diese beschriebene nachteilige Wirkung tritt bei den allgemein verwendeten Materialien bereits bei Umgebungstemperatur von ca. 80° C bis 90°C auf. Solchen Temperaturen ist eine Fahrzeugheckleuchte oder ein Fahrzeugrückstrahler beispielsweise dann ausgesetzt, wenn im Zusammenhang mit einer Fahrzeuglackierung eine Wärmebehandlung des Lacks erfolgt.

Auch beim Tempern der optischen Gläser zum Abbau innerer Spannung, was im Rahmen der Fertigung derartiger optischer Einrichtungen erfolgen kann, treten derartig hohe Temperaturen auf.

Um dieses Problem zu lösen ist es erforderlich, für ausreichenden Abbau des im Hohlraum entstehenden Überdruckes zu sorgen.

Bei einem Rückstrahler gemäß DE-OS 31 39 767 ist vorgesehen, daß die Rückwand des Rückstrahlers im Bereich einer nach außen offenen Nut eine Öffnung besitzt, wobei in die Nut eine unter Vorspannung an der Fahrzeugkarosserie anliegende Dichtung eingelegt ist, welche die Öffnung in der Rückwand des Rückstrahlers verdeckt. Die Öffnung und die Dichtung wirken dabei als Überdruckventil.

Eine derartige Lösung ist aber sehr stark von der speziellen Formgestaltung der betreffenden optischen Einrichtung im Zusammenhang mit den Anbauverhältnissen an der Fahrzeugkarosserie abhängig. Die Anwendbarkeit dieser Lösung ist also stark eingeschränkt.

Aus der DE-OS 27 53 934 ist ein anderer Rückstrahler für Fahrzeuge bekannt, in dessen rückwärtige Abdeckplatte ein Einwegeventil eingesetzt ist, das bei einem bestimmten Überdruck im abgeschlossenen Innenraum des Rückstrahlers selbsttätig öffnet. Dieses Einwegeventil wird gebildet von einer Öffnung in der rückwärtigen Abdeckplatte, in welche ein hutförmiger elastischer Pfropfen eingesetzt ist. Dieser Pfropfen besitzt an einem Ende einen angeformten Kragen, dessen äußerer Rand als Lippendichtung ausgebildet ist und außen auf der rückwärtigen Abdeckplatte des Rückstrahlers aufliegt. Zwischen dem Kragen und der Abdeckplatte ist also ein ringförmiger Hohlraum gebildet. Am anderen Ende ist an den Pfropfen eine Schulter angeformt, die den Rand der Öffnung auf der Innenseite des Rückstrahlers hintergreift. Die Öffnung in der rückwärtigen Abdeckplatte ist mit einer oder mehreren Ausbuchtungen oder anderen Öffnungen ausgestattet, die nicht von der Schulter des Pfropfens überdeckt werden und somit der Innenraum des Rückstrahlers mit dem ringförmigen Hohlraum unter dem Kragen des Pfropfens verbunden ist.

Bei Entstehen eines Überdrucks im Rückstrahlerinneren hebt der Rand des Pfropfenkragens an der Außenseite des Rückstrahlers ab und sorgt kurzzeitig für eine Verbindung des Rückstrahlerinnenraumes mit der Umgebungsatmosphäre. Dadurch wird der Überdruck im Rückstrahlerinneren abgebaut.

Nachteilig an dieser Lösung ist, daß von Fall zu Fall der hutförmige Pfropfen in der Öffnung der Abdeckplatte eine solche Position einnehmen kann, in welcher die Schulter des Pfropfens die Ausbuchtungen der Öffnung vollständig bedeckt und somit bei Überdruck im Rückstrahlerinneren eine Verbindung mit der Umgebungsatmosphäre nicht herstellbar ist.

Andererseits entsteht bei Abkühlung nach erfolgtem Druckausgleich im inneren des Rückstrahlers ein Unterdruck. Dieser bewirkt nicht nur, daß der äußere Kragen des Pfropfens an die Oberfläche der rückwärtigen Abdeckplatte gepreßt wird, sondern der gesamte Pfropfen wird in Richtung des Rückstrahlerinneren gesaugt. Diese unterschiedlichen Beaufschlagungen wiederholen sich bei Temperaturwechseln. Dabei wird der Pfropfen im Bereich vom Übergang des Kragens in den Schaft häufig mit der scharfen Kante der Öffnung kontaktiert, was zu Verschleißerscheinungen des Stopfens mit nachfolgenden Undichtheiten führt. Funktionsschädigender Schmutz und Feuchtigkeit können somit in den Innenraum des Rückstrahlers gelangen.

Der Erfindung liegt nunmehr die Aufgabe zugrunde, eine optische Einrichtung, insbesondere eine Fahrzeugheckleuchte, mit einem mit hoher Sicherheit funktionierenden Überdruckventil für einen abgeschlossenen Hohlraum der optischen Einrichtung zu schaffen, welches außerdem in hohem Maße unabhängig ist von der speziellen Formgestaltung der optischen Einrichtung.

Diese Aufgabe wird durch eine optische Einrichtung, insbesondere Fahrzeugheckleuchte, mit den Merkmalen des Oberbegriffs des Anspruchs 1 gelöst, wobei erfindungsgemäß der in der Öffnung befindliche Schaft des gummielastischen Ventilkörpers schlanker ist, als die Öffnung in der einen Wandung der optischen Einrichtung. Damit wird erreicht, daß unabhängig von der jeweiligen Lage des Ventilkörpers in der Öffnung immer ein ausreichender Spalt zwischen dem Ventilkörper und der Öffnungswand verbleibt, um Luft hindurchströmen zu lassen. Bei zentrischer Lage des Ventilkörpers ergäbe sich ein Ringspalt. Wenn der Ventilkörper dagegen irgendwo an der Öffnungswand anliegt, ist der Spalt im Querschnitt betrachtet sichelförmig, wobei sich der Spalt fast über den gesamten Umfang der Öffnung erstreckt. Um mit Sicherheit den erforderlichen Luftdurchtritt bis zu dem ringförmigen Hohlraum unter dem Kragen des Ventilkörpers zu gewährleisten, sind in die Schulter des Ventilkörpers mindestens zwei Kanäle eingebracht, die auf den Umfang des Ventilkörpers bezogen einen Abstand voneinander haben. Dadurch wird verhindert, daß die Schulter des Ventilkörpers an der Innenseite der Wandung den Spalt verdeckt und den Luftdurchtritt verhindert. Selbst wenn der Ventilkörper genau in dem Bereich des einen Kanals an der Öffnungswandung anliegt und dadurch dieser eine Kanal verschlossen ist, besteht ausreichend Luftdurchtrittsmöglichkeit durch den anderen Kanal.

Als Alternative zu den mindestens zwei in die Schulter des Ventilkörpers eingebrachten Kanäle können auch mindestens zwei Nuten oder Kerben oder ähnliche Ausbuchtungen in die Kante eingebracht sein, welche die Innenwand der Öffnung mit der Innenseite der einen Wandung der optischen Einrichtung bildet. Diese mindestens zwei Nuten, Kerben oder dergleichen Ausbuchtungen, die schräg in die Öffnung hinein verlaufen, sind über den Umfang dieser inneren Kante der Öffnung verteilt. Dadurch wird analog zu den mindestens zwei Kanälen in der Schulter des Ventilkörpers erreicht, daß selbst bei Anliegen des in der Öffnung befindlichen Schaftes des Ventilkörpers an der Öffnungswandung im Bereich einer Nut, Kerbe oder dgl. Ausbuchtung der Luftdurchtritt durch mindestens eine andere Nut, Kerbe oder dergleichen Ausbuchtung zu dem ringförmigen Hohlraum unter dem Kragen des Ventilkörpers gewährleistet ist.

Wenn, beispielsweise durch Erwärmung, in dem Hohlraum der optischen Einrichtung ein Überdruck entsteht, so pflanzt sich dieser durch die Kanäle in der Schulter des Ventilkörpers oder alternativ durch die Nuten, Kerben oder dergleichen Ausbuchtungen in der inneren Kante der Öffnung und anschließend durch den Spalt zwischen Öffnungswand und Ventilkörper bis in den ringförmigen Hohlraum unter dem Kragen des Ventilkörpers fort. Überschreitet dieser Überdruck einen Grenzwert, dann hebt die Dichtlippe des umlaufenden Kragens des Ventilkörpers von der Außenseite der Wandung ab; aus dem Hohlraum kann Luft in die Umgebungsatmosphäre entweichen. Nach erfolgtem Druckausgleich legt sich die Dichtlippe wegen ihrer elastischen Rückstellkräfte wieder vollständig an die Außenseite der Wandung an und schließt den Hohlraum der optischen Einrichtung wieder von der Umgebungsatmosphäre ab. Schmutz und Feuchtigkeit können nicht in den Hohlraum der optischen Einrichtung gelangen.

Bei Abkühlung entsteht andererseits in dem Hohlraum der optischen Einrichtung ein Unterdruck gegenüber der Umgebungsatmosphäre. Dadurch kann der Ventilkörper entgegen der elastischen Kräfte des umlaufenden Kragens etwas in den Hohlraum hinein verschoben werden, bis die Innenseite des umlaufenden Kragens an der äußeren Kante der Öffnung anliegt. Durch wechselnde Erwärmung und Abkühlung kann der Ventilkörper also mehrfach in einem bestimmten Spielraum in axialer Richtung verschoben werden. Um eine mechanische Schädigung des Kragens des Ventilkörpers durch häufige Kontaktierung mit der äußeren Kante der Öffnung, was zur Funktionsuntüchtigkeit des Ventilkörpers führen kann, zu vermeiden, ist gemäß Anspruch 2 die Öffnung im Bereich ihrer Mündung an der Außenseite der Wandung erfindungsgemäß erweitert. Diese erweitere Öffnungsmündung erleichtert außerdem die Montage des Ventilkörpers, der von der Außenseite der Wandung her mit seinem pilzförmigen Kopf bei elastischer Verformung in die Öffnung eingepreßt wird. Durch die erweitere Öffnungsmündung an der Außenseite wird also auch die Gefahr der Beschädigung des Ventilkörpers bei dessen Montage deutlich herabgesetzt.

Gemäß den vorteilhaften Ausgestaltungen nach den Ansprüchen 3 und 4 ist in die äußere Kante der Öffnung eine Fase eingebracht bzw. geht die Öffnung mit einer Rundung in die Außenseite der Wandung über. Der gerundete Übergang bietet eine noch größere Schonung für den Ventilkörper, wohingegen die Fase etwas einfacher und billiger herstellbar ist.

Vorteilhaft ist es, wenn gemäß Anspruch 5 die mindestens zwei Kanäle in der Schulter des Ventilkörpers radial offene Nuten oder Kerben oder ähnliche Ausnehmungen sind. Dadurch ist mit Sicherheit ausgeschlossen, daß ein Kanal durch irgendwelche elastischen Deformationen des Ventilkörpers verschlossen und damit luftundurchlässig ist. Ebenso ist es vorteilhaft, daß die Kanäle an der Unterseite der Schulter mit ihrem Grund an der Mantelfläche des Schaftes aus der Schulter austreten. Damit ist gewährleistet, daß bereits bei einem winzigen Spalt zwischen Öffnungswand und Ventilkörperschaft im Bereich eines Kanales der Luftdurchtritt gewährleistet ist.

Aus Kostengründen ist es günstig, in die Schulter des Ventilkörpers nur zwei Kanäle einzubringen. Die größte Sicherheit in Bezug auf die Gewährleistung des Luftaustritts ist in diesem Fall dann gegeben, wenn die zwei Kanäle gemäß Anspruch 6 am Ventilkörper gegenüberliegen. Unabhängig von der Lage des Ventilkörpers in der Öffnung ist immer die Möglichkeit des Luftdurchtritts garantiert.

Weitere Ausgestaltungen werden in den nachfolgenden Ausführungsbeispielen an Hand der Zeichnungen beschrieben.

In den Zeichnungen zeigen
- Figur 1: einen annähernd horizontalen Schnitt durch eine Mehrkammerheckleuchte für einen Personenkraftwagen,
- Figur 2: eine Ansicht eines gummielastischen Ventilkörpers,
- Figur 3: eine Draufsicht auf den gummielastischen Ventilkörper gemäß Figur 2,
- Figur 4: einen Ausschnitt der einen Wandung mit eingesetztem Ventilkörper (Schnittdarstellung),
- Figur 5: eine andere Ausführung zu Figur 4,
- Figur 6: eine weitere Ausführung der Erfindung.

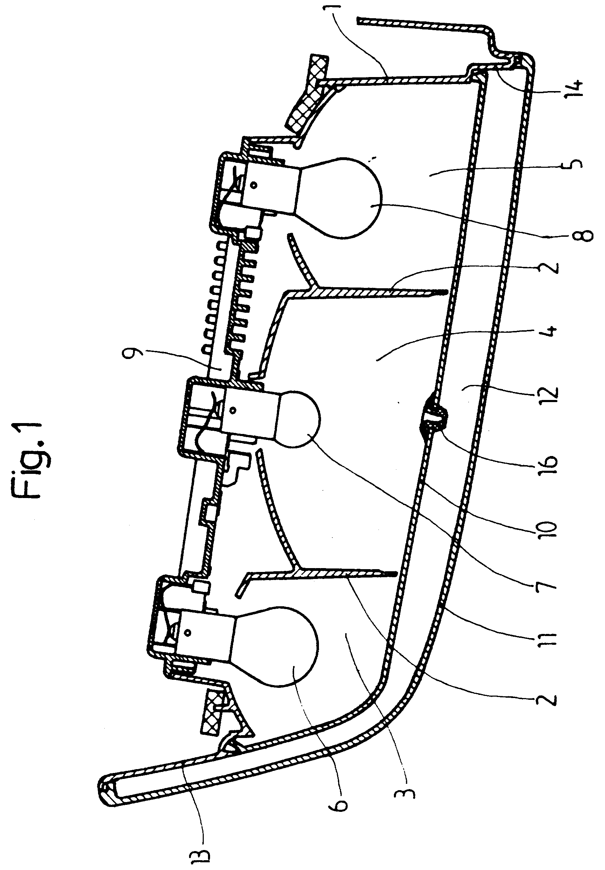

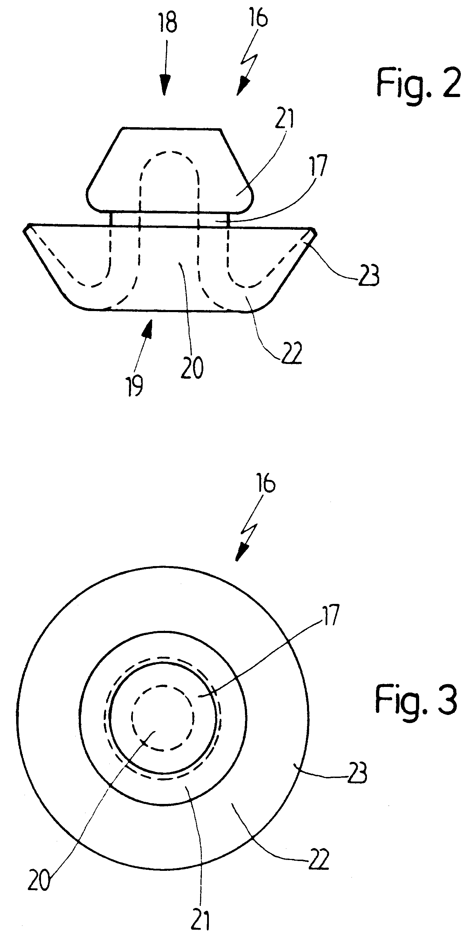

Die Figuren 2 bis 6 sind gegenüber Figur 1 in einem vergrößerten Maßstab dargestellt, um die charakteristischen Merkmale der Erfindung besser darstellen zu können.

In Figur 1 ist ein etwa waagerechter Schnitt durch eine Mehrkammerheckleuchte für einen Personenkraftwagen dargestellt. Diese Mehrkammerheckleuchte besitzt ein Leuchtengehäuse 1, wobei die Trennwände 2 eine Unterteilung in die Leuchtenkammern 3, 4, 5 zur Folge haben. Von der Rückseite des Leuchtengehäuses 1 ragen die Glühlampen 6, 7, 8 durch entsprechende Öffnungen mit ihrem Glaskolben in die zugeordneten Leuchtenkammern 3, 4, 5 hinein. Die Glühlampen 6, 7, 8 sind dabei in einem Träger 9 gehalten, der wiederum lösbar an der Rückseite des Leuchtengehäuses 1 gehalten ist und gleichzeitig für den elektrischen Anschluß sorgt. An der Lichtaustrittsseite sind die Leuchtenkammern 3, 4, 5 von einer lichtdurchlässigen Zwischenscheibe 10 abgedeckt, und das gesamte Leuchtengehäuse 1 ist an der Lichtaustrittsseite durch eine Abdeckscheibe 11 abgeschlossen. Die Zwischenscheibe 10 und auch die Abdeckscheibe 11 können in entsprechenden Abschnitten entsprechend der Funktion der zugeordneten Leuchtenkammer mit lichtbrechenden oder lichtreflektierenden optischen Elementen ausgestattet und zusätzlich farblos oder farbig sein. In einem als Rückstrahler wirkenden Flächenbereich, der in Figur 1 nicht dargestellt aber dem Fachmann bekannt ist, kann die Zwischenscheibe 10 mit einer reflektierenden Schicht ausgestattet, also lichtundurchlässig sein, und die Abdeckscheibe 11 ist in diesem Bereich mit Reflexionsprismen versehen.

Bei der Mehrkammerheckleuchte in Figur 1 ist ein Hohlraum 12 erkennbar, der von der Zwischenscheibe 10, der Abdeckscheibe 11, sowie den Wandungen 13 und 14 des Leuchtengehäuses 1 gebildet wird. Dieser Hohlraum 12 ist an sich gewissermaßen luftdicht abgeschlossen. Gemäß der Erfindung ist im Bereich der Leuchtenkammer 4 in eine Öffnung 15 der Zwischenscheibe 10 ein pfropfenähnlicher, gummielastischer Ventilkörper 16 als Einwegeventil derart eingesetzt, daß bei Überdruck im Hohlraum 12 dieser Hohlraum 12 kurzzeitig zwecks Druckausgleichs über die Leuchtenkammer 4 mit der Umgebungsatmosphäre verbindbar ist. Der Ventilkörper 16 könnte genau so gut an irgendeiner anderen geeigneten Stelle in die Zwischenscheibe 10 oder in die Abdeckscheibe 11 oder in eine der Wandungen 13, 14 eingesetzt sein, vorausgesetzt, an dieser Stelle wird dadurch die optische Funktion nicht mehr als zulässig gestört, der Hohlraum ist mit der Umgebungsatmosphäre verbindbar und es wird für den Betrachter nicht ein unschöner Anblick erzeugt. Die geometrische Ausbildung der Öffnung 15 und des Ventilkörpers 16 sowie die Funktionsweise des Einwegeventils werden an Hand der nachfolgenden Figuren beschrieben.

In den Figuren 2 und 3 ist eine grundsätzliche Form eines gummielastischen, pfropfenartigen Ventilkörpers 16 dargestellt. Der Ventilkörper 16 ist im wesentlichen rotationssymmetrisch gestaltet und hat zwei Enden 18 und 19, wobei sich von dem Ende 19 aus ein Sackloch 20 in den Ventilkörper 16 erstreckt. An dem Ende 18 ist außen an den Ventilkörper 16 eine umlaufende Schulter 21 angeformt, die dem Ventilkörper 16 an diesem Ende 18 eine pilzähnliche bzw. kegelstumpfartige Gestalt verleiht. In seinem mittleren Bereich besitzt der Ventilkörper 16 einen zylindrischen Schaft 17, mit welchem er später in der Öffnung 15 der Zwischenscheibe 10 setzt. Letztendlich ist an dem Ende 19 ein umlaufender Kragen 22 angeformt, dessen äußerster Rand als Dichtlippe 23 ausgebildet ist.

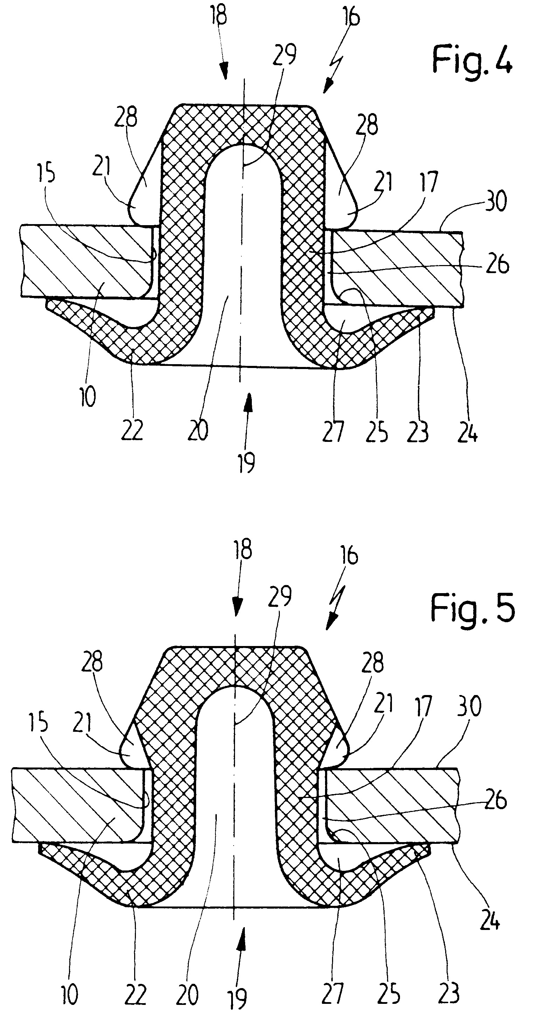

In Figur 4 ist ein Ventilkörper 16 zu erkennen, der in der Öffnung 15 der Zwischenscheibe 10 angeordnet ist. An der auf den Hohlraum 12 der Heckleuchte bezogenen Außenseite 24 der Zwischenscheibe 12 ist die Mündung der Öffnung 15 erweitert. Die Wand der Öffnung 15 geht mit einer Rundung 25 in die Außenseite 24 über. Es ist deutlich zu sehen, daß der Schaft 17 des Ventilkörpers 16 schlanker ist als die Öffnung 15 und somit der Spalt 26 gebildet wird. Der Ventilkörper 16 wird mit seinem Ende 18 von der Außenseite 24 her in die Öffnung 15 eingesetzt. Seine Schulter 21 hintergreift die Innenseite 30 der Zwischenscheibe 10. An der Außenseite 24 der Zwischenscheibe 10 liegt die Dichtlippe 23 vollständig an, wobei der Kragen 22 unter einer bestimmten elastischen Vorspannung steht. Unter dem Kragen 22 befindet sich ein ringförmiger Hohlraum 27, der mit dem Spalt 26 in Verbindung steht. Es ist außerdem zu erkennen, daß in die Schulter 21 des Ventilkörpers 16 diametral gegenüberliegend zwei Kanäle in Form randoffener Nuten 28 eingebracht sind, welche parallel zur Mittelachse 29 verlaufen und an der Unterseite der Schulter 21 fluchtend mit der Mantelfläche des Schaftes 17 austreten. Auf diese Weise ist eine sichere Verbindung des Hohlraumes 12 über die Nuten 28 und den Spalt 26 mit dem ringförmigen Hohlraum 27 für den Luftdurchtritt gewährleistet.

Wenn nunmehr in dem Hohlraum 12 der Fahrzeugheckleuchte durch Erwärmung ein Luftüberdruck entsteht und dieser einen Grenzwert überschreitet, hebt die Dichtlippe 23 des umlaufenden Kragens 22 an irgendeiner Stelle kurzzeitig von der Außenseite 24 der Zwischenscheibe 10 ab. In diesem Moment wird der Hohlraum 12 mit der Umgebungsatmosphäre verbunden, und zwecks Druckausgleichs strömt Luft aus dem Hohlraum 12 über die Nuten 28, den Spalt 26 und den Hohlraum 27 in die Umgebungsatmosphäre. Nach erfolgtem Druckausgleich legt sich auf Grund der elastischen Rückstellkräfte des Ventilkörpers 16 die Dichtlippe 23 wieder an die Außenseite 24 der Zwischenscheibe 10 an, womit der Hohlraum 12 wieder luftdicht gegen die Umgebungsatmosphäre abgeschlossen ist. Der Grenzwert des Luftüberdruckes im Hohlraum 12, bei dessen Überschreiten das soeben beschriebene Einwegeventil öffnet, wird durch die elastische Vorspannung bestimmt, mit welcher die Dichtlippe 23 des Kragens 22 an die Außenseite 24 der Zwischenscheibe 10 gepreßt wird.

Die in der Figur 5 dargestellte Ausführung entspricht in ihrem Wesen und ihrer Funktion der Ausführung gemäß Figur 4. Der Unterschied besteht darin, daß bei der Ausführung in Figur 5 die Nuten 28 schräg verlaufen, das heißt zur Mittelachse 25 hin geneigt sind.

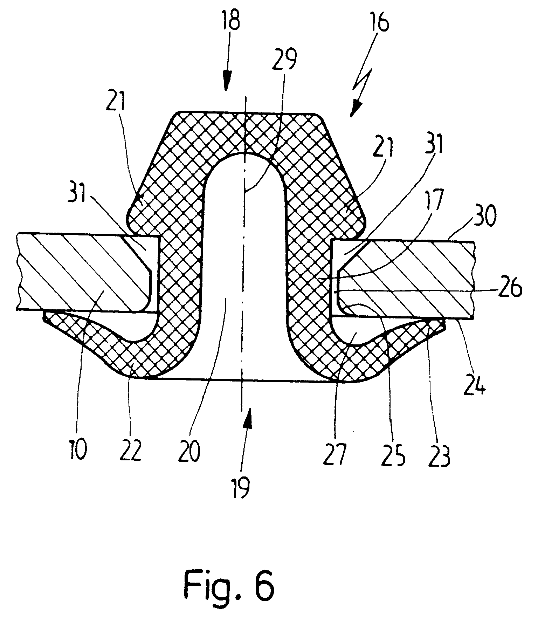

In Figur 6 ist eine weitere Ausführung der Erfindung dargestellt. Der Ventilkörper 16 entspricht hierbei dem in den Figuren 2 und 3 dargestellten Ventilkörper 16. In die umlaufende Schulter 21 sind keinerlei Kanäle in Form von Kerben, Nuten oder dergleichen eingebracht. Um trotzdem eine sichere Verbindung für den Luftdurchtritt vom Hohlraum 12 über den Spalt 26 zu dem ringförmigen Hohlraum 27 zu gewährleisten, sind in die Kante, welche von der kreisförmigen Öffnung 15 an der Innenseite 30 der Zwischenscheibe 10 gebildet wird, einander gegenüberliegend zwei Nuten 31 eingebracht. Unabhängig von der Lage des Ventilkörpers 16 in der Öffnung 15 ist gewährleistet, daß bei entsprechend großem Luftüberdruck im Hohlraum 12 die zum Druckausgleich erforderliche Menge Luft mindestens durch eine der Nuten 31 über den Spalt 26 und den Hohlraum 27 in die Umgebungsatmosphäre entweichen kann. Die Nuten 31 verlaufen schräg auf die Mittelachse 29 zu und münden etwa im mittleren Bereich in die Öffnung 15 ein. Diese Nuten 31 durchdringen nicht die gesamte Dicke der Zwischenscheibe 10 und münden nicht direkt in den Hohlraum 27 ein. Somit wird vorteilhaft erreicht, daß der Kragen 22 unter Berücksichtigung aller möglichen Lagen des Ventilkörpers 16 in der Öffnung 15 relativ klein gehalten werden kann und trotzdem mit Sicherheit einen luftdichten Abschluß bildet. Von Vorteil ist auch, daß somit im Bereich der Rundung 25 keinerlei scharfe Ecken oder Kanten durch die Nuten 31 gebildet werden. Derartige scharfe Ecken oder Kanten könnten den Ventilkörper 16 bei dessen Montage oder bei dessen axialer Bewegungen, die durch Temperaturschwankungen und somit Druckschwankungen im Hohlraum 12 hervorgerufen werden, beschädigen und damit die Funktionssicherheit des Einwegeventils stören.

Im übrigen ist die Funktionsweise des in Figur 6 dargestellten Einwegeventils die gleiche wie bei den Ausführungen gemäß der Figuren 4 und 5.

Es ist noch zu bemerken, daß die Erfindung nicht auf eine Mehrkammerheckleuchte für einen Personenkraftwagen beschränkt ist.

## Patentansprüche

1. Optische Einrichtung für Fahrzeuge, insbesondere fahrzeugheckleuchte, mit einem von Wandungen gebildeten abgeschlossenen Hohlraum, wobei zumindest eine Wandung mindestens teilweise als optische Scheibe ausgebildet ist und mit einem in eine dieser Wandungen eingesetzten Einwegeventil, welches bei Überdruck im Hohlraum den Hohlraum zwecks Druckausgleichs mit der Umgebungsatmosphäre verbindet, wobei ein pfropfenartiger Ventilkörper aus gummielastischem Material in eine Öffnung der einen Wandung so eingesetzt ist, daß er mit seinem äußeren, als Lippendichtung ausgebildeten Rand eines an einem Ende angeformten umlaufenden Kragens auf der Außenseite der einen Wandung aufliegt und der besagte Hohlraum mit dem ringförmigen Hohlraum unter dem Kragen des Ventilkörpers verbunden ist und daß an dem anderen Ende des Ventilkörpers eine Schulter angeformt ist, die den inneren Rand der Öffnung hintergreift, dadurch gekennzeichnet, daß der in der Öffnung (15) befindliche Schaft (17) des Ventilkörpers (16) schlanker ist als die Öffnung (15) selbst, daß mindestens zwei über den Umfang verteilt in die Schulter (21) des Ventilkörpers (16) eingebrachte Kanäle oder mindestens zwei über den Umfang verteilt in die innere Kante der Öffnung (15) eingebrachte und schräg in die Öffnung (15) hinein verlaufende Nuten (31), Kerben oder dergleichen Ausbuchtungen zur Verbindung des Hohlraumes (12) der optischen Einrichtung mit dem ringförmigen Hohlraum (27) unter dem Kragen (22) des Ventilkörpers (16) vorhanden sind.

2. Optische Einrichtung für Fahrzeuge nach Anspruch 1, dadurch gekennzeichnet, daß die Öffnung (15) in der einen Wandung im Bereich ihrer Mündung in die Außenseite (24) der Wandung erweitert ist.

3. Optische Einrichtung für Fahrzeuge nach Anspruch 1, dadurch gekennzeichnet, daß der an der Außenseite (24) der einen Wandung befindliche Rand der den Ventilkörper (16) aufnehmenden Öffnung (15) eine Fase besitzt.

4. Optische Einrichtung für Fahrzeuge nach Anspruch 1, dadurch gekennzeichnet, daß die Innenseite der den Ventilkörper (16) aufnehmenden Öffnung (15) in der einen Wandung mit einer Rundung (25) in die Außenseite (24) der einen Wandung übergeht.

5. Optische Einrichtung für Fahrzeuge nach Anspruch 1, 2 oder 3, dadurch gekennzeichnet, daß die Kanäle in der Schulter (21) des Ventilkörpers (16) radial offene Nuten (28) oder Kerben sind, deren Gründe an der Unterseite der Schulter (21) fluchtend mit der Mantelfläche des in der Öffnung (15) befindlichen Schaftes (17) des Ventilkörpers (16) aus der Schulter (21) austreten.

6. Optische Einrichtung für Fahrzeuge nach einem der vorhergehenden Ansprüche, dadurch gekennzeichnet, daß zwei Kanäle einander gegenüberliegend in die Schulter (21) des Ventilkörpers (16) eingebracht sind.

7. Optische Einrichtung für Fahrzeuge nach einem der vorhergehenden Ansprüche, dadurch gekennzeichnet, daß die Kanäle in der Schulter (21) des Ventilkörpers (16) im wesentlichen parallel zur Mittelachse (29) des Ventilkörpers (16) verlaufen.

8. Optische Einrichtung für Fahrzeuge nach einem der vorhergehenden Ansprüche, dadurch gekennzeichnet, daß die Kanäle in der Schulter (21) des Ventilkörpers (16) zur Mittelachse (29) des Ventilkörpers (16) hin geneigt sind.

9. Optische Einrichtung für Fahrzeuge nach einem der vorhergehenden Ansprüche, dadurch gekennzeichnet, daß die Nuten (31) oder Kerben in der inneren Kante der den Ventilkörper (16) aufnehmenden Öffnung (15) mit ihrem Grund etwa im mittleren Bereich der Wand der Öffnung (15) einmünden.

10. Optische Einrichtung für Fahrzeuge nach einem der vorhergehenden Ansprüche, dadurch gekennzeichnet, daß zwei Nuten (31) oder Kerben einander gegenüberliegend in die innere Kante der den Ventilkörper (16) aufnehmenden Öffnung (15) eingebracht sind.
